Europäisches Patentamt

European Patent Office

Office européen des brevets

(19)

(11) Veröffentlichungsnummer : **0 128 490**
**B1**

(12) # EUROPÄISCHE PATENTSCHRIFT

(45) Veröffentlichungstag der Patentschrift :
27.07.88

(51) Int. Cl.⁴ : **F 28 D  1/04**, F 28 F 21/00,
**F 28 F  9/00**

(21) Anmeldenummer : 84106303.5

(22) Anmeldetag : 01.06.84

(54) **Wärmeaustauscher.**

(30) Priorität : 08.06.83 DE 3320632

(43) Veröffentlichungstag der Anmeldung :
19.12.84 Patentblatt 84/51

(45) Bekanntmachung des Hinweises auf die Patenterteilung : 27.07.88 Patentblatt 88/30

(84) Benannte Vertragsstaaten :
AT BE CH DE FR GB IT LI LU NL SE

(56) Entgegenhaltungen :
EP-A- 0 069 262
DE-A- 2 232 386
DE-A- 2 410 670
DE-A- 2 419 751
DE-A- 3 144 813
DE-C-   136 931
FR-A- 2 481 433
FR-A- 2 494 830
GB-A- 2 056 043

(73) Patentinhaber : HOECHST AKTIENGESELLSCHAFT
Postfach 80 03 20
D-6230 Frankfurt am Main 80 (DE)

(72) Erfinder : Disselbeck, Dieter
Am Rehsteig 3
D-6232 Bad Soden am Taunus (DE)
Erfinder : Vollrath, Hans-Peter
Am Bornwald 1
D-6239 Eppstein/Taunus (DE)

**Beschreibung**

Die Erfindung betrifft einen Wärmeaustauscher, bestehend aus einem Stützrahmen sowie Zulaufleitung, Sammelleitung für den Vorlauf, wendelförmigen Wärmeaustauscherrohren, Sammelleitung für den Rücklauf und Ablaufleitung für das Wärmeträgermedium, wobei jeweils zwei benachbarte Wendeln verzahnend ineinander angeordnet sind.

Bekannt sind in der Technik eine Vielzahl von verschiedenen Wärmetauschern, so z. B. aus der DE-C-136 931 solche, bei denen die Wärmeaustauscherrohre wendelförmig verzahnend ineinander angeordnet sind. Diese räumliche Anordnung von selbsttragenden Rohren gestattet die Herstellung von Heizkörpern mit kleinem Rauminhalt. Auch sogenannte Rohrregister-Wärmetauscher, z. B. als Solarabsorber oder Energiezaun, sind bekannt. Die Rohraußendurchmesser dieser Wärmeaustauschersysteme sind in der Regel größer als 15 mm. Alle diese Systeme machen sich die durch den kreisrunden Querschnitt der Rohre vergrößerte äußere Wärmeübertragungsfläche zunutze, wobei der Wärmeaustausch linear mit der Länge der Rohre einhergeht. Entscheidend wird jedoch der Wärmeübergang durch den Außendurchmesser der verwendeten Rohre bestimmt.

Man hat aus diesem Grunde auch bereits den Einsatz von Hohlfäden als Tauscherrohre vorgeschlagen (EP-A-0 069 262). Die Hohlfäden sollen dabei jeweils in Ebenen angeordnet sein und ihre Festigkeit durch feste Verbindung an quer dazu angeordneten Stützstäben erhalten. Dies soll z. B. durch Verschweißen jedes Berührungspunktes eines Hohlfadens mit den Stützstäben bewerkstelligt werden.

Die Erfindung hat sich die Aufgabe gestellt, die bekannten Wärmeaustauscher, welche aus Wärmeaustauscherrohren aufgebaut sind, zu verbessern und eine Anordnung der Rohre zu finden, die ohne feste Verbindung ihrer Kreuzungspunkte mit Stützstäben eine ausreichende Formstabilität bei hoher Wärmetauscherleistung gestattet.

Dies ist dadurch gelungen, daß die Wärmeaustauscherrohre Kapillarrohre sind und daß jeweils im Raum der Verzahnung zwischen zwei benachbarten Wendeln über die ganze Länge der Wendeln ein Verbindungselement angeordnet ist. Bevorzugt bestehen die Wärmeaustauscherkapillaren (3) aus Metall, Glas, Keramik oder Kunststoffen. Insbesondere weisen die Wärmeaustauscherkapillaren (3) einen Außendurchmesser von 0,1 bis 10 mm auf, und sie haben Wanddicken von 40 % - 5 % des Außendurchmessers der Wärmeaustauscherkapillaren (3). Vorteilhaft betragen die lichten Abstände $a_1$ der Kapillarwindungen das 1 bis 5-fache des Außendurchmessers der Wärmeaustauscherkapillaren (3). In einer bevorzugten Ausführungsform bildet das Verteilungssystem für das Wärmeaustauschermedium gleichzeitig den Stützrahmen (R) des Wärmeaustauschers und gestattet so den Aufbau von Wärmeaustauscherpakete oder -blöcken.

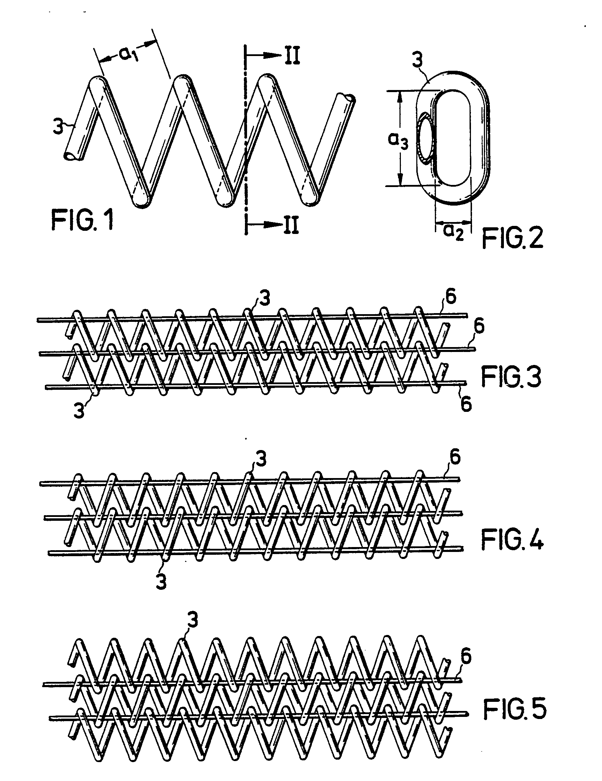

Der Aufbau eines solchen erfindungsgemäßen Wärmeaustauschers soll im folgenden anhand der Figuren 1 bis 6 beschrieben werden.

In den Figuren bedeuten : R Stützrahmen, 1 Zulaufleitung, 2 Sammelleitung (Vorlauf), 3 Wärmeaustauscherkapillaren, 4 Sammelleitung (Rücklauf), 5 Ablaufleitung, 6 Verbindungselemente, $a_1$ lichter Abstand der Kapillarwindung, $a_2$ lichte Öffnung der Kapillarwindung, $a_3$ lichte Höhe der Kapillarwindung.

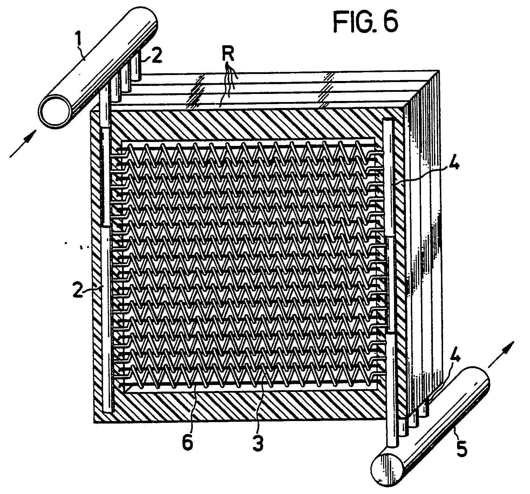

Figur 1 zeigt dabei eine Wendel einer Wärmeaustauscherkapillare (3) mit dem lichten Abstand $a_1$ der Kapillarwindung. Figur 2 ist ein Schnitt durch die Wärmeaustauscherkapillare (3) in Figur 1 entlang der Linie II/II ; in Figur 2 sind die lichte Öffnung $a_2$ der Kapillarwindung und die lichte Höhe $a_3$ der Kapillarwindung gezeigt. Figur 3 zeigt eine linksgängige Verzahnung der Wärmeaustauscherkapillare (3), Figur (4) eine rechtsgängige Verzahnung und Figur 5 eine abwechselnd links- und rechtsgängige Verzahnung der Wärmeaustauscherkapillaren (3). Figur 6 stellt eine Anordnung von mehreren Wärmeaustauscherelementen in schematischer Sicht dar.

Durch die erfindungsgemäßen Wärmeaustauscher aus wendelförmig gewickelten Wärmeaustauscherkapillaren (3) wird die wirksame Länge des Wärmeaustauscherrohres auf etwa das doppelte pro umbauter Flächeneinheit gesteigert, so daß unter ansonsten gleichen Bedingungen etwa die doppelte Wärmeübertragungsleistung im Vergleich zu gestreckten Rohren erzielt wird.

Da die Herstellung dünnwandiger Kapillaren z. B. aus gegen Wärme, Säure oder Laugen beständigen Werkstoffen keinerlei technische Probleme bereitet (z. B. aus Polyvinylidendifluorid, Polytetrafluorethylen, legierten Edelstählen, Titan), ist der Einsatz des erfindungsgemäßen Wärmeaustauschers für alle Bereiche der Technik interessant und nicht auf wenige spezielle Teilbereiche beschränkt. Durch die vorzugsweise viereckige rahmenartige Stützkonstruktion der einzelnen Stützrahmen (R), welche gleichzeitig die Sammelleitungen (2) für den Vorlauf, und die Sammelleitungen (4) für den Rücklauf des zurückströmenden Wärmeaustauschermediums enthalten, lassen sich große und kleine Wärmeaustauscherpakete oder -blöcke mit beliebiger Leistung herstellen, wobei nur darauf zu achten ist, daß die einzelnen Wendeln der Wärmeaustauscherkapillaren (3) in der Regel immer gleichen Druckverlust aufweisen sollten — also bei gleichem Innendurchmesser gleich lang sein sollten — damit gleichmäßiger Durchsatz des Wärmeaustauschermediums und damit gleichmäßige Wärmeübertragungsleistung in jedem Flächenabschnitt erreicht wird. Natürlich können auch unterschiedliche Kapillardurchmesser und von der Kreisform abweichende Querschnitte der Wärmeaustauscherkapillaren (3) pro Rahmen (R) oder pro Block bzw. Paket benutzt werden, jedoch bedeutet dies im Endeffekt immer eine besondere Druckverlust-Abstimmung der einzelnen Wendeln der Wärmeaustauscherkapillaren (3) und eine besondere statische Auslegung bei der Konstruktion abhängig vom Werkstoff und besondere Fertigungseinrichtungen. Aus diesen Gründen werden Wärmeaustauscherkapillaren (3) mit kreisförmigem Querschnitt bevorzugt.

Um die Wendeln der Wärmeaustauscherkapillaren (3) bei der freien oder zwangsweisen Strömung des Wärmeaustauschermediums um die Wärmeaustauscherkapillaren (3) in Folge von dabei zwangsläufig auftretenden Turbulenzen — welche für die Wärmeübertragung erwünscht sind — vor örtlichen Auslenkungen, Biegeschwingungen oder ähnlichem zu schützen, sind die wendelförmigen Wärmeaustauscherkapillaren (3) verzahnend ineinandergreifend angeordnet und durch Verbindungselemente (6), die jeweils im Raum der Verzahnung zwischen zwei benachbarten Wendeln über die ganze Länge der Wendeln angeordnet sind, miteinander verbunden ; vorzugsweise sind die Verbindungselemente (6) geradlinig zwischen den Stützrahmen (R) gespannte Drähte oder auch Kapillaren. Figuren 3, 4 und 5 zeigen dies besonders deutlich.

Die Verbindungselemente (6) sind vorzugsweise dann ebenfalls von dem Wärmeaustauschermedium durchströmt, wenn dies bei hohen Temperaturbelastungen zum Schutze, also zur Kühlung, notwendig oder sinnvoll erscheint. Damit erspart man sich den Einsatz anderer Halbzeuge und/oder anderer Werkstoffe, was aus vielerlei Gründen oft erwünscht ist (z. B. Vermeidung von Kontakt-Korrosion, unterschiedliche Ausdehnung, Schweißbarkeit).

Die einzelnen benachbarten Wendeln der Wärmeaustauscherkapillaren (3) werden vorzugsweise abwechselnd links- und rechtsgängig angeordnet (Figur 5), damit bei der Zusammenstellung mehrerer Rahmen — die gleichgerichtet oder quer zueinander angeordnet sein können — bestmögliche Turbulenzen und möglichst geringe Druckverluste durch die ständig wechselnde Umlenkung des äußeren Wärmeaustauschermediums um die Wärmeaustauscherkapillaren erzielt wird. Dies trägt zu besonders intensivem Wärmeaustausch bei und verringert das erforderliche umbaute Volumen.

Die Konstruktion der Stützrahmen (R) kann aus einem Formteil bestehen ; der Stützrahmen (R) kann aber auch in einem gesonderten Arbeitsgang nach dem Einlegen der Wendeln der Wärmeaustauscherkapillaren (3) und Verbindungselemente (6) durch Spritzgießen o.ä. hergestellt sein. Die in den Rahmenkonstruktionen untergebrachten Leitungen (Sammelleitung 2, Sammelleitung 4) können innerhalb oder außerhalb der Rahmen parallel geschaltet angeschlossen sein.

### Patentansprüche

1. Wärmeaustauscher bestehend aus einem Stützrahmen (R), einer Zu- und Ablaufleitung (1, 5) für ein Wärmeaustauschermedium, Sammelleitungen (2, 4) für Vor- und Rücklauf sowie wendelförmigen Wärmeaustauscherrohren (3) wobei jeweils zwei benachbarte Wendeln verzahnend ineinander angeordnet sind, dadurch gekennzeichnet, daß die Wärmeaustauscherrohre (3) Kapillarrohre sind und daß jeweils im Raum der Verzahnung zwischen zwei benachbarten Wendeln über die ganze Länge der Wendeln ein Verbindungselement (6) angeordnet ist.

2. Wärmeaustauscher nach Anspruch 1, dadurch gekennzeichnet, daß die Wärmeaustauscherkapillaren (3) aus Metall, Glas, Keramik oder Kunststoffen bestehen.

3. Wärmeaustauscher nach einem der Ansprüche 1 und 2, dadurch gekennzeichnet, daß die Wärmeaustauscherkapillaren (3) einen Außendurchmesser im Bereich von 0,1 bis 10 mm haben und die Wanddicke 40 % bis 5 % des Kapillarrohr-Außendurchmessers beträgt.

4. Wärmeaustauscher nach einem der Ansprüche 1 bis 3, dadurch gekennzeichnet, daß die lichten Abstände $a_1$ der Kapillarwindung der Wärmeaustauscherkapillaren (3) vorzugsweise das 1 bis 5-fache des Außendurchmessers der Wärmeaustauscherkapillaren (3) betragen.

5. Wärmeaustauscher nach einem der Ansprüche 1 bis 4, dadurch gekennzeichnet, daß das Verteilungssystem für das Wärmeaustauschermedium gleichzeitig den Rahmen (R) des Wärmeaustauschers bildet.

6. Wärmeaustauscher nach einem der Ansprüche 1 bis 5, dadurch gekennzeichnet, daß die Verbindungselemente (6) aus Metall, Glas, Keramik oder Kunststoff bestehen.

7. Wärmeaustauscher nach einem der Ansprüche 1 bis 6, dadurch gekennzeichnet, daß die Verbindungselemente (6) hohl sind und wie die Wärmeaustauscherkapillaren (3) von dem Wärmeaustauschermedium durchflossen werden.

8. Wärmeaustauscher nach einem der Ansprüche 1 bis 7, dadurch gekennzeichnet, daß der Stützrahmen (R) zum Aufbau von Wärmeaustauscherpaketen oder -blöcken aus einzelnen Wärmeaustauschern viereckig ausgebildet ist.

### Claims

1. A heat exchanger, comprising a support frame (R), a feed line and a discharge line (1, 5) for a heat exchange medium, headers (2, 4) for the forward and return flows and helical heat exchange tubes (3), two adjoining helices in each case being arranged to interlock with one another, characterized in that the heat exchange tubes are capillary tubes, and wherein a connecting element (6) is arranged in each case in the interlocking region between two adjoining helices over the entire length of the helices.

2. The heat exchanger as claimed in claim 1, characterized in that the heat exchange capillaries (3) are composed of metal, glass, ceramics or plastics.

3. The heat exchanger as claimed in either of claims 1 or 2, characterized in that the heat exchange capillaries (3) have an external diameter in the range from 0.1 to 10 mm and the wall thickness is 40 % to 5 % of the external diameter of the capillary tubes.

4. The heat exchanger as claimed in any one of claims 1 to 3, characterized in that the clear spacings $a_1$ between the capillary windings of the heat exchange capillaries (3) are preferably 1 to 5 times the external diameter of the heat exchange capillaries (3).

5. The heat exchanger as claimed in any one of claims 1 to 4, characterized in that the distribution system for the heat exchange medium forms at the same time the frame (R) of the heat exchanger.

6. The heat exchanger as claimed in any one of claims 1 to 5, characterized in that the connecting elements (6) are composed of metal, glass, ceramics or plastics.

7. The heat exchanger as claimed in any one of claims 1 to 6, characterized in that the connecting elements (6) are hollow and carry a flow of heat exchange medium, like the heat exchange capillaries (3).

8. The heat exchanger as claimed in any one of claims 1 to 7, characterized in that the support frame (R) is made quadrangular to allow heat exchanger packs or blocks to be assembled from individual heat exchangers.

### Revendications

1. Echangeur de chaleur constitué d'un cadre porteur (R), d'une conduite d'arrivée et d'une conduite de sortie (1, 5) pour un fluide d'échange thermique, de conduites collectrices (2, 4) pour l'alimentation et le retour, ainsi que de tubes d'échange thermique (3) hélicoïdaux, dans lequel deux hélices voisines sont disposées chaque fois de manière à s'imbriquer l'une dans l'autre, caractérisé en ce que les tubes d'échange thermique (3) sont des tubes capillaires et qu'un élément d'assemblage (6) est disposé chaque fois dans la zone d'imbrication entre deux hélices voisines, sur toute la longueur des hélices.

2. Echangeur selon la revendication 1, caractérisé en ce que les capillaires (3) sont en métal, verre, céramique, ou matières synthétiques.

3. Echangeur selon la revendication 1 ou 2, caractérisé en ce que les capillaires (3) possèdent un diamètre extérieur compris entre 0,1 et 10 mm et une épaisseur de paroi correspondant à 40 % - 5 % du diamètre extérieur du tube capillaire.

4. Echangeur selon une des revendications 1 à 3, caractérisé en ce que les intervalles $a_1$ entre les spires des capillaires hélicoïdaux (3) correspondent de préférence à une à cinq fois le diamètre extérieur des capillaires (3).

5. Echangeur selon une des revendications 1 à 4, caractérisé en ce que le système de distribution pour le fluide d'échange thermique forme en même temps le cadre (R) de l'échangeur de chaleur.

6. Echangeur selon une des revendications 1 à 5, caractérisé en ce que les éléments d'assemblage (6) sont en métal, verre, céramique ou matières synthétiques.

7. Echangeur selon une des revendications 1 à 6, caractérisé en ce que les éléments d'assemblage (6) sont creux et sont parcourus, comme les capillaires d'échange thermique (3), par le fluide d'échange thermique.

8. Echangeur selon une des revendications 1 à 7, caractérisé en ce que le cadre support (R) est un cadre quadrangulaire en vue de la constitution de paquets ou de blocs d'échange thermique à partir d'échangeurs de chaleur séparés.

FIG. 1

FIG. 2

FIG. 3

FIG. 4

FIG. 5

FIG. 6